# EUROPÄISCHE PATENTSCHRIFT

(11) **EP 1 153 579 B1**
(45) Veröffentlichungstag und Bekanntmachung des Hinweises auf die Patenterteilung: **07.11.2007**
(21) Anmeldenummer: 01111328.9
(22) Anmeldetag: 09.05.2001
(51) Int. Cl.: A61C 5/06, A61C 5/04, B65D 51/28, B65D 75/58

(54) **Vorrichtung zum Lagern und Applizieren ein- oder mehrkomponentiger fliessfähiger Dentalmaterialien**
Appliance for storage and application of flowable dental materials consisting of one or more components
Dispositif pour le stockage et l'application de matériaux dentaires fluides possédant un ou plusieurs composants

(30) Priorität: 10.05.2000 DE 10022733; 12.03.2001 DE 10111769
(43) Veröffentlichungstag der Anmeldung: 14.11.2001
(73) Patentinhaber: VOCO GmbH, 27472 Cuxhaven (DE)
(72) Erfinder: Maletz, Reinhard, Dr., 27472 Cuxhaven (DE); Leiner, Uwe, 27632 Midium (DE); Plaumann, Manfred Thomas, 27476 Cuxhaven (DE)

(56) Entgegenhaltungen:
- WO-A-99/18007
- US-A- 3 756 386
- US-A- 5 660 273

## Beschreibung

Die Erfindung betrifft eine Vorrichtung zum Lagern und Applizieren ein- oder mehrkomponentiger fließfähiger Dentalmaterialien. Insbesondere zur Applikation fließfähiger dentaler Adhäsiv- oder Befestigungssubstanzen, Fluoridlacke, Liner oder Desensitizer.

In vielen verschiedenen Anwendungsfällen, vor allem in der Medizin und Zahnmedizin, ist es notwendig, daß eine geringe Menge einer fließfähigen, mitunter pastösen, Substanz auf unterschiedliche Oberflächen, wie menschliche Haut, Haare oder Zähne aufgetragen werden muß. Es existieren einkomponentige Substanzen, die alle erforderlichen Komponenten in einer Phase enthalten, um dem Anwender das exakte Dosieren und Anmischen der einzelnen Komponenten zu ersparen. Häufig muß die Substanz jedoch erst kurz vor dem Auftragen aus verschiedenen Komponenten angemischt werden, wie z.B. zweckmäßigerweise bei zweikomponentigen dentalen Dentin- und Schmelzadhäsiven.
Die zur Applikation verwendeten Applikationsvorrichtungen sind häufig aus Sterilitätsgründen als Einwegartikel zu gebrauchen. Um eine Kontamination der zu applizierenden Substanz auszuschließen, werden vorgefertigte, mit geringen Mengen vorportionierte Vorrichtungen, Behältnisse oder Blisterverpackungen angeboten. Dabei stehen sowohl einkomponentige als auch zweikomponentige, anzumischende Materialsysteme zur Verfügung, wie sie z.B. in DE 3717512, DE 29814215 oder US 4812067 dargestellt sind.
Darüber hinaus sind verschiedene Blisterverpackungen und Applikationssysteme für medizinische und/oder zahnmedizinische Anwendungen bekannt, wie z.B. aus EP 770021 oder EP 895943. Nachteilig ist bei diesen Applikationssystemen, daß sie mehrere Anwendungsschritte umfassen, bevor der Anwender die zu applizierende Substanz verwenden kann.
Die Herstellung der bekannten Vorrichtungen ist zumeist aufwendig und kostenintensiv.

In EP 967929 wird ein Einkomponenten-Applikationssystem dargestellt, indem eine geringe Menge (etwa 0,1 ml) eines dentalen Adhäsivs in einem Einmalbehältnis aus Kunststoff untergebracht ist. Der Behälter ist mit einem abdrehbaren Verschluß flüssigkeitsdicht verschlossen. Zusätzlich ist der Behälter mit einem Applikationsgerät, z.B. einem Pinsel, in einer gasdichten Folie eingeschweißt. Bei der Applikation muß der Anwender zunächst die Folie und anschließend den Behälterverschluß entfernen. Anschließend muß er mit dem Applikationsgerät in den Behälter eintauchen um die zu applizierende Substanz aufzunehmen. Nachteilig bei dem dargestellten Lager- und Applikationssystem ist die Material- und Verpackungsfülle, die ein Abfallentsorgungsproblem darstellt. Aufgrund der verschiedenen Verpackungen ist die Handhabung für den Anwender kompliziert und mühevoll.

Nächstliegender Stand der Technik ist EP 895943. Bei der in EP 895943 beschriebenen Vorrichtung zum Lagern und Auftragen zwei zu mischender fließfähiger zahnmedizinischer Substanzen befinden sich die zu mischenden Substanzen in zwei verschiedenen Folienkammern, das Auftraggerät in einer weiteren dritten Kammer. Alle Kammern sind hintereinander über selektiv zu öffnende Durchgangsbereiche (Sollbruchstellen) verbunden. Zur Anmischung und Auftragung muß zunächst die eine Substanz aus der ersten Kammer vollständig in die zweite Kammer durch den ersten Durchgangsbereich überführt werden. Danach muß die gemischte Substanz aus den Kammern 1 und 2 vollständig in die Kammer 3 gedrückt werden, um das Auftraggerät vollständig zu benetzen. Anschließend entfernt der Anwender das Auftraggerät aus der Kammer 3 zur Applikation der 2-komponentigen Substanz. Dem Zahnarzt oder seinem Hilfspersonal wird dabei eine hohe Aufmerksamkeit abverlangt, damit er alle Anwendungsvorgänge korrekt durchführt.
Zum Unterschied zur erfindungsgemäßen Vorrichtung wird in EP 895943 eine festinstallierte Kammer zur Aufnahme des Auftraggerätes offenbart aus der gleichzeitig die zu applizierende Substanz entnommen werden muß. Weiterhin sieht EP 895943 keine mit einem Auftraggerät durchstoßbaren Folienteile und kein Griffabschnitt zur besseren Handhabung vor.
Nachteilig wirkt sich bei der beschriebenen Ausführungsform aus, daß das vollständige Überführen der jeweiligen Substanzen in die Kammern sichergestellt sein muß, damit sich das richtige Mischungsverhältnis einstellt. Weiterer Nachteil ist, daß ein Rückfließen der Substanzen in die Kammern nicht ausgeschlossen werden kann. Weiterhin werden keine mehr als zweikomponentigen zahnmedizinischen Systeme offenbart.

Relevanter Stand der Technik sind ebenfalls die US-A-5 660 273 und WO 99/18007. Beide Dokumente beschreiben eine Vorrichtung zum Lagern und Applizieren von Dentalmaterialien, wobei in beiden Fällen zur Entnahme der Substanzen die Deckfolie des Behältnisses abzuziehen ist.

Bei den dargestellten Vorrichtungen zur Lagerung und Applikation aus dem Stand der Technik werden Behältnisse aus Kunststoff, z.B. EP 967929, oder Folienbehälter, z.B. EP 895943, verwendet. Es ist bekannt, daß Gase wie z.B. Sauerstoff oder verdampfbare Lösungsmittel, z.B. Aceton, durch Kunststoff hindurch diffundieren können. Die aus dem Stand der Technik bekannten Folien weisen mindestens eine gas- und diffusionsdichte Sperrschicht auf, so daß die Gasdiffusion durch die Sperrschicht unterbunden wird.
Die Materialien, die in solchen Behältern gelagert werden sollen, sind unterschiedlich in bezug auf ihre Stabilität gegen Luftsauerstoff oder dem Verlust von Lösungsmittel. Somit sind beispielsweise aufgrund der besagten Diffusionsproblematik dentale Adhäsive auf Acetonbasis nicht in Kunststoffbehältnissen über einen längeren Zeitraum lagerfähig. Eine Verlängerung der Lagerfähigkeit ist bei reinen Kunststoffverpackungen derzeit nur durch eine Kühlschranklagerung möglich.
Materialien die hingegen Substanzen enthalten, die durch den Zutritt von Sauerstoff stabilisiert werden, können nicht in Folienbehältnissen gelagert werden. Beispielsweise erfordert die Lagerung von Peroxid- oder Sulfinatverbindungen, wie sie in dentalen Compositematerialien als Polymerisationsinitiatoren oder Beschleuniger eingesetzt werden, eine gewisse Sauerstoffdurchlässigkeit durch das Lagermedium.
Materialien, die einerseits Komponenten enthalten, die gasdicht gelagert werden müssen, und andererseits Komponenten, die einen Gasdiffusion zur Stabilisierung benötigen, sind damit nicht in einer einzigen Vorrichtung aus dem Stand der Technik bereit zu stellen.

Aufgabe der vorliegenden Erfindung ist es, eine gas- und flüssigkeitsdichte, einfach zu handhabende Vorrichtung zum Lagern und Applizieren geringer Mengen ein- oder mehrkomponentiger fließfähiger Dentalmaterialien bereit zu stellen. Die vorliegende Erfindung soll insbesondere eine einfache und sichere Anwendung der zu applizierenden Substanzen mit wenigen, einfachen Handgriffen sicherstellen. D.h. der Anwender hat neben der einfachen Handhabung vor allem eine stabile und sichere Vorrichtung während der Applikation zur Hand. Weiterhin soll die Vorrichtung einfach und preiswert in der Herstellung sein. Weiterhin soll für unterschiedliche Komponenten der zu applizierenden Substanz eine jeweilige hohe Lagerdichtigkeit gewährleistet sein.

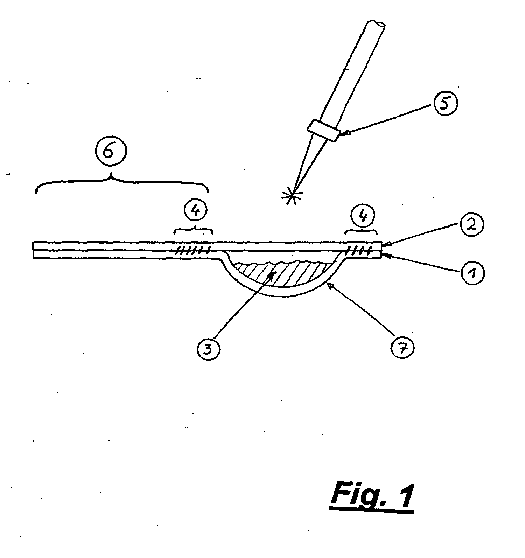

Anhand der nachfolgenden, nicht maßstabsgerechten Abbildungen Fig.1 bis Fig. 20 werden die erfindungsgemäße Vorrichtung und bevorzugte Ausführungsformen näher erläutert ohne einschränkend zu wirken.

Die erfindungsgemäße Lösung dieser Aufgaben ist durch eine Vorrichtung entsprechend den Merkmalen des Anspruchs 1 gegeben.

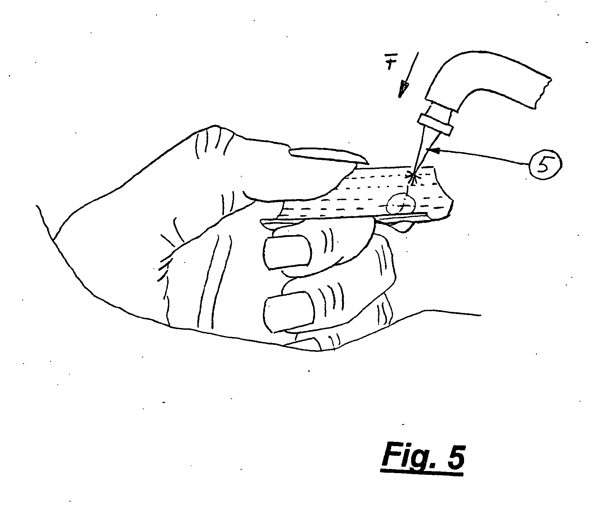

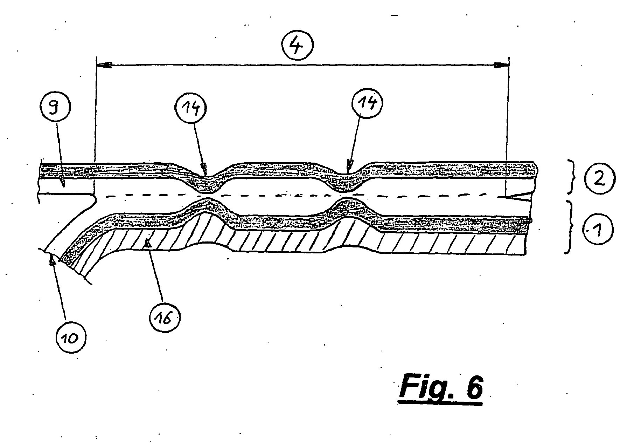

Eine Ausführungsform der Vorrichtung zum Lagern und Applizieren fließfähigen Dentalmaterials (3) besteht aus einer ersten, bei der Herstellung verformbaren, nicht durchstoßbaren Folie (1) mit einer Vertiefung, Mulde (7) zur Aufnahme der Substanz (3) und einer zweiten, mit der ersten Folie (1) siegelbaren Folie (2), die die Mulde (7) so weit wie möglich gas- und flüssigkeitsdicht verschließt (Fig. 1), wobei die Innenseite der erste Folie (1) und/oder der zweiten Folie (2) aus einem siegelfähigen Kunststoff (9, 10) besteht (Fig. 6). Die zweite Folie (2) kann mit einem geeigneten Applikationsgerät (5) durchstoßen werden, um anschließend die Substanz (3) aus der Mulde (7) zu entnehmen. Zur besseren, einfachen und sicheren Handhabung weist die erste Folie (1) einen Griffabschnitt (6) auf, an dem der Anwender die Vorrichtung bequem und sicher festhalten kann (Fig. 1, 5).
Nicht durchstoßbar bedeutet, daß die erste Folie (1) unter den Anwendungsbedingungen beim Zahnarzt mit einem üblicherweise geeigneten Applikationsgerät (5) nicht durchtrennbar ist.

Die dargestellten Ausführungsformen sind insbesondere bei Substanzen geeignet, die einen hohen Dampfdruck haben, wie z.B. acetonhaltige Substanzen (Fig. 1 bis 7). Durch die Einschweißung solcher Substanzen in Folienbehälter, die z.B. aus Aluminiumlaminatfolie bestehen, ist eine längerer Lagerung ohne nennenswerten Lösungsmittelverlust möglich, da die einzige Möglichkeit zum Herausdiffundieren des Lösungsmittels durch den siegelfähigen Kunststoff (9, 10) hindurch, d.h. längs zur Siegelnaht (4) erfolgen kann, die ohne großen Materialaufwand nahezu beliebig lang gestaltet werden kann.

Die beschriebenen Folien (1 und/oder 2) können aus einer mehrschichtigen Folie und/oder verschiedenen Folienschichten, beispielsweise aus Laminatfolie, Polypropylen, Polyethylen, Aluminium oder anderen versiegelungsfähigem Verbundmaterial, zur Erzielung einer hohen Barrierewirkung gegen Ausdünstungen von Flüssigkeitsbestandteilen bestehen. Derartige Folien und die daraus hergestellten Folienbehälter sind beispielsweise aus DE 2324296 bekannt.

Die erste Folie (1) weist für eine bessere Kaltverformbarkeit eine äußere Schicht (16) aus einem festen, gleitfähigem Kunststoff, wie beispielsweise Polyamid oder Polyester, auf (Fig. 6).

Bei Verwendung dieser mehrschichtigen Folien ist ein Lösungsmittelverlust bzw. ein Herausdiffundieren von Substanzbestandteilen (3), durch die Sperrschicht, die insbesondere metallisch sein kann, ausgeschlossen. Es bleibt ein möglicher Verlust entlang der Siegelnaht (4), da diese aus einem Kunststoff (9, 10) besteht, dessen Durchlässigkeit für leichtflüchtige Substanzen nach dem Stand der Technik auch bei Einsatz besonderer Barrierekunststoffe oder zusätzlicher in den Kunststoff eingelagerter Füllstoffe nur reduziert aber nie 100%ig verhindert werden kann (Fig. 6).
Die Durchlässigkeit der gesamten Vorrichtung wird im wesentlichen durch den Querschnitt sowie die Länge (Dicke) der teildurchlässigen Siegelnaht (4) bestimmt. Aufgrund der Eigenschaften einer Foliensiegelnaht, die naturgemäß nur einen sehr geringen Querschnitt aufweist, der sich aus der Dicke der siegelfähigen Schicht (9, 10) ergibt, ist schon ohne weitere Maßnahmen mit einem geringen Substanzverlust zu rechnen. Da die Nahtbreite ohne besonderen Materialaufwand sehr lang gestaltet werden kann (bis zu mehreren mm), wird der Verlust an Substanz weiter reduziert.
Die siegelfähige Kunststoffschicht (9) der zweiten Folie (2) hat bevorzugt eine Dicke von 0,01 bis 20 µm, insbesondere eine Dicke von 2 bis 5 µm. Demgegenüber hat die siegelfähige Schicht (10) der ersten Folie üblicherweise eine Dicke von 1 bis 100 µm.
Durch den Einsatz geeigneter Barrieren (14), die durch die geschickte Ausgestaltung der Siegelnaht (4) entsteht, kann der teildurchlässige Querschnitt in diesem Bereich weiter reduziert werden. Damit wird eine weitere Reduzierung des Verlustes von Substanzbestandteilen erreicht (Fig. 6).

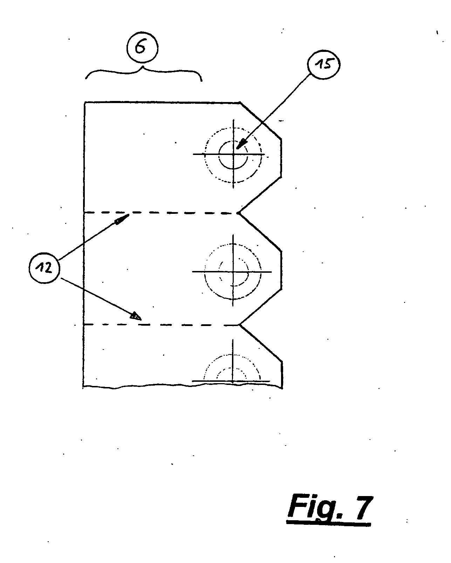

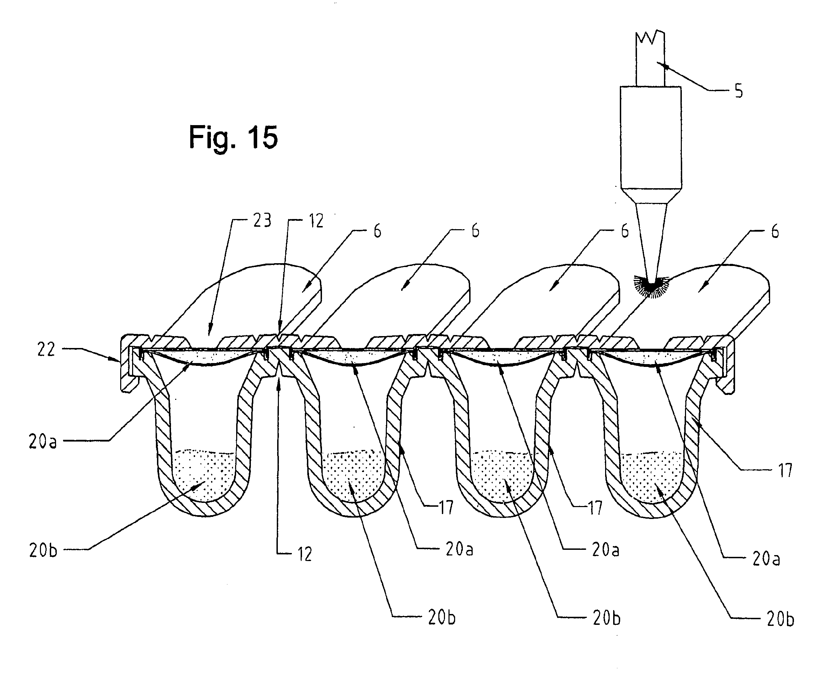

Für die Verwendung der beschriebenen Vorrichtungen im zahnmedizinischen Bereich ist es häufig notwendig, daß nur geringe Mengen, ca. 0,01 bis maximal 10 ml, einer Substanz zu applizieren sind. Aus diesem Grund sind die dargestellten Vorrichtungen in ihren äußeren Maßen diesen geringen Mengen angepaßt, so daß beispielsweise die Mulde (7) ein Innenraumvolumen von 0,02 bis 15 ml aufweisen kann. Die Vorrichtungen sind damit vorteilhaft als Einmalvorrichtungen zu verwenden. Um dem Anwender zu ermöglichen, daß er verschiedene Anwendungen, z.B. mehrere Patienten hintereinander, ein Patient mit mehreren Behandlungsstellen oder eine Behandlungsstelle größeren Ausmaßes, durchführen kann, können mehrere Vorrichtungen durch Perforationen oder Sollbruchstellen (12) an der Folie (1) miteinander verbunden sein. Die Behälter sind dann je nach Bedarf an diesen Stellen voneinander lösbar (Fig. 7, 15).

Der Begriff Komponente wird als Bestandteil der zu applizierenden Substanz verstanden und gibt keine Auskunft über die Homogenität der zu applizierenden Substanz. Die Substanz (3) kann verschiedenen Konsistenzen von pastös bis flüssig aufweisen und homo- oder heterogen gelöste feste oder gasförmige Bestandteile enthalten. Die Substanz (3) kann beispielsweise ein dentales Adhäsiv- oder Befestigungssystem, ein Fluoridlack, ein Liner oder ein Desensitizer sein. Bekannte Adhäsivsysteme bestehen beispielsweise aus hydrophilen Methacrylaten (z.B. HEMA), polyfunktionellen Monomeren, Initiatoren, Coinitiatoren und Lösungsmittel. Die fließfähige Substanz (3), z.B. das Adhäsivsystem, kann auf den zu behandelnden Zahn aufgetragen werden und je nach Initiator/Coinitiator durch Lichtbestrahlung anschließend ausgehärtet werden.

Das Applikationsgerät (5) besteht aus einem Griffabschnitt und einem Applikationskopf, der die zu applizierende Substanz aufnehmen kann. Es kann sich dabei um ein Pinsel, eine Bürste, ein Schaumstoffpelet oder sonstige benetzbare Mittel handeln, die aus dem Stand der Technik, z.B. US 5001803 oder US 5150495 bekannt sind. Beispielsweise setzt sich das Applikationsgerät (5) aus einem an einem Stab befestigten Schaustoffpelet, Pele Tim der Firma VOCO GmbH, Cuxhaven, zusammen (Fig. 1, 5).
Als weitere bevorzugte Ausführungsform kann die Substanz (3) mikroverkapselte Komponenten enthalten, die durch das Applikationsgerät (5) in die Substanz vermischt werden können. Mikroverkapselte Komponenten sind beispielsweise in DE 19802644 beschrieben. Die verkapselte Komponente wird durch Vermischen mit dem Applikationsgerät (5) in der Mulde (7) freigesetzt. Die Substanz (3) kann dann wie beschrieben vermischt und appliziert werden.

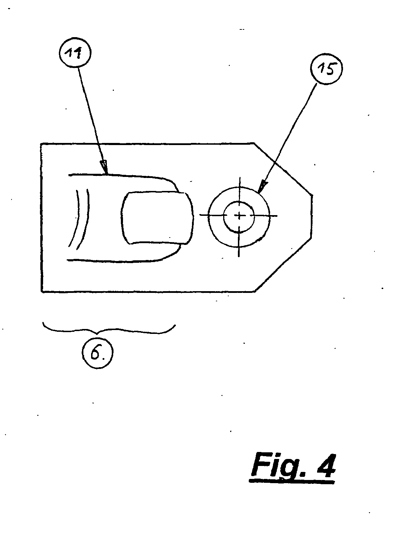

Die Anwendung der erfindungsgemäßen Vorrichtung ist einfach und sicher. Der Anwender nimmt die Vorrichtung zwischen Daumen und Zeigefinger am Griffabschnitt (6) in die Hand (Fig. 5). Um ein irrtümlichen Fehlgebrauch zu vermeiden, kann auf der Oberseite des Griffabschnittes ein Daumen abgebildet (11) werden (Fig. 4).
Anschließend wird die Folie (2) mit einem geeigneten Applikationsgerät (5) im Bereich der Mulde (7) durchstoßen. Auch hier empfiehlt es sich zur Verbesserung der Anwendung, daß der Durchstoßpunkt mit einer gut sichtbaren Markierung (15) versehen ist (Fig. 4). Hilfsweise kann eine Sollbruchstelle in der Folie (2) angebracht sein, die ein gezieltes Durchstoßen mit dem Applikationsgerät (5) ermöglicht.

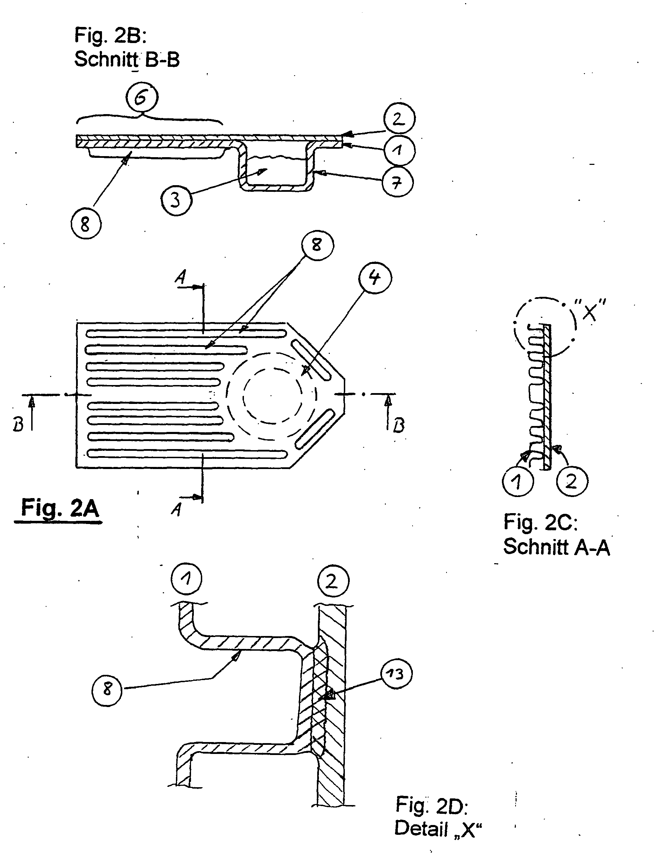

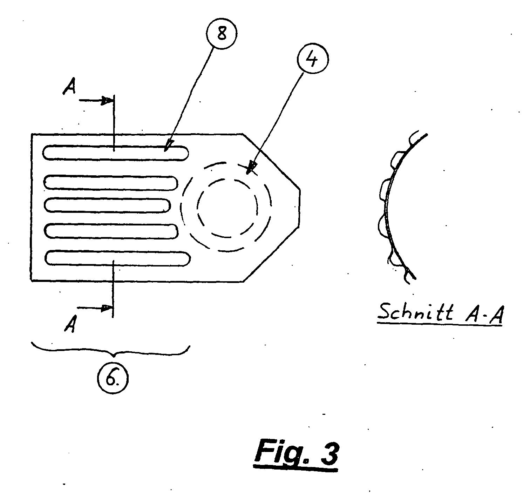

Damit ist der Anwender in der Lage schnell und gezielt die benötigte Applikationsmenge zu entnehmen. Beim Durchstoßen wird das Applikationsgerät (5) von der Substanz (3) benetzt und kann sofort appliziert werden. Um ein zu starkes Abstreifen der Substanz (3) vom Applikationsinstrument (5) an den Rändern des beim Durchstoßen entstandenen Loches zu verhindern, kann das Loch durch eine Rührbewegung aufgeweitet werden, was zudem den Vorteil einer guten Durchmischung nicht homogener zu applizierender Substanzen (3) hat. Eine Beschädigung oder das Durchstoßen der Folie (1) wird durch die Dicke und die Festigkeit der Folie (1) vermieden.
Überraschenderweise tritt aufgrund der Oberflächenspannung der fließfähigen Substanz (3) aus dem entstandenen Loch keine Substanz aus, selbst wenn die Vorrichtung auf den Kopf gehalten wird.
Damit die beim Durchstoßen der Folie (2) aufzubringende Kraft (F) (Fig. 5) nicht zu einem Herunterknicken der zwischen Daumen und Zeigefinger festgehaltenen Vorrichtung führt, ist die Folie (1) mit Verstrebungen, Stegen (8) versehen (Fig. 2, 3). Mit diesen Verstrebungen (8) wird das Widerstandsmoment längs der Schnittachse A-A (Fig. 2A, 2B, 3) deutlich erhöht. Weitere Stabilität wird durch eine zusätzliche Verbindung, Verklebung (13) zwischen den Verstrebungen (8) und der Deckfolie (2) erreicht (Fig. 2A).
Zur stabileren Handhabung kann der Griffabschnitt (6) der Vorrichtung im Querschnitt U-förmig gestaltet (Fig. 3).
Ein wesentlicher Vorteil dieser Ausführungsvorrichtung liegt in der vergleichsweise kostengünstigen Herstellung aus Folien.

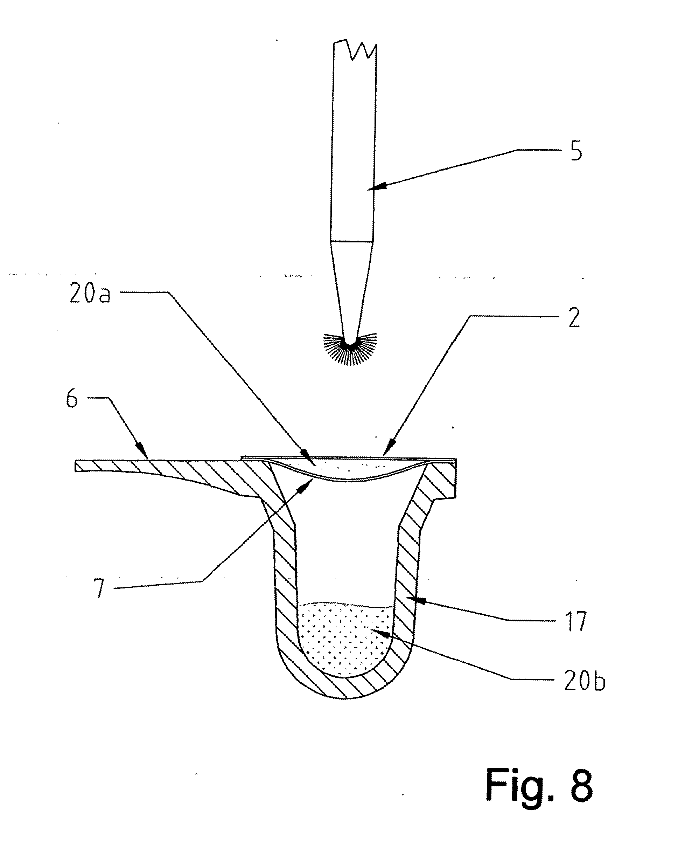

In einer weiteren Ausführungsform für zwei- oder mehrkomponentige Substanzen kann anstelle der ersten Folie (1), die eine Mulde (7) zur Aufnahme der zu applizierenden Substanz (3) bildet, ein aus Kunststoff bestehender Behälter (17) vorgesehen sein (Fig. 8).
Die Komponenten, die gasdicht gelagert werden müssen, wie z.B. acetonhaltige Substanzen, werden in Folienbehältern (7) untergebracht. Die Folienbehälter (7) sind aus der durchstoßbaren Deckfolie (2) gefertigt, wie es aus dem Stand der Technik bekannt ist. Die Komponente (20), die in einem gasdichten System nicht stabil lagerfähig sind, werden im Kunststoffbehälter (17) untergebracht. Somit ist eine den jeweiligen Komponenten angepaßte individuelle Lagerdichtigkeit gewährleistet.

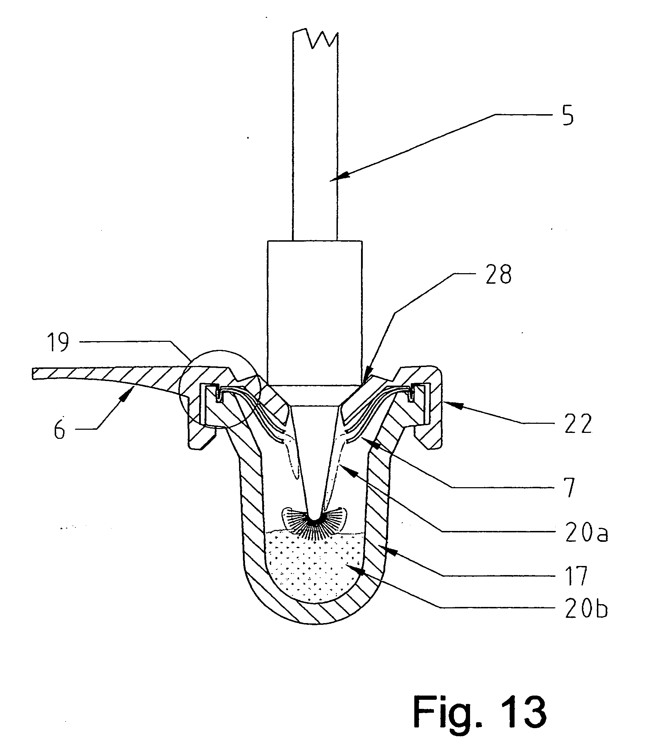

Im Innenraum des Behälters (7) werden bei zwei- oder mehrkomponentigen Substanzen (3) die Komponenten (3) zusammengeführt und angemischt (Fig.8). Der Folienbehälter (7), der eine Komponente (20a) beinhaltet, ist so am Randbereich befestigt, so daß der Innenraum des Kunststoffbehälters (17) fest verschlossen ist (Fig. 8). Der Folienbehälter (7) befindet sich oberhalb des Innenraums (von 17). Mittels des Applikationsgerätes (5) kann der Folienbehälter (7) durchstoßen werden, so daß die sich darin befindliche Komponente in den Innenraum von (17) ergießt (Fig. 13.). Zusätzlich weist der Behälter (17) einen Griffabschnitt (6) auf, der aus dem Folienmaterial der Folienbehälters und mit den beschriebenen Verstrebungen, Stegen (8) versehen ist.

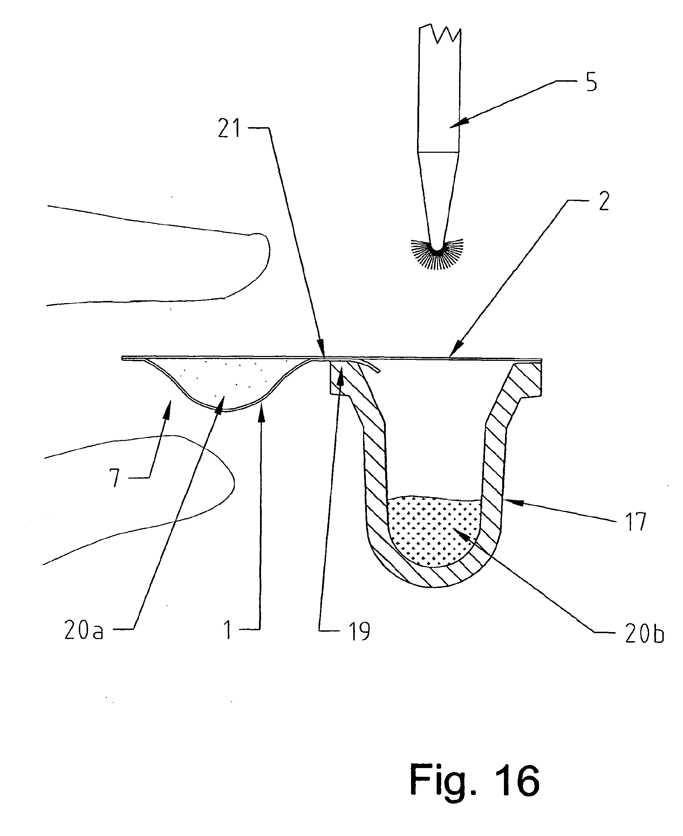

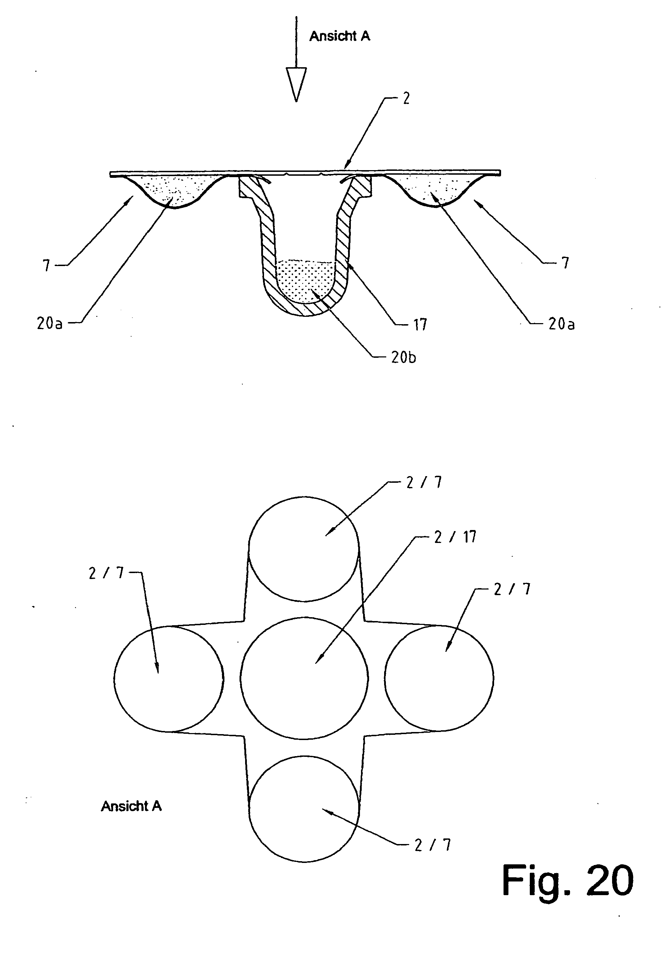

Der Folienbehälter (7) kann auch außerhalb des Randbereiches (19) befestigt werden, wobei der Folienbehälter nicht oberhalb des Innenraumes von (17) liegt und diesen verschließt sondern sich seitlich am Behälter (17) befindet (Fig. 16,20). Dann kann es vorgesehen sein, daß der Folienbehälter (7) nicht insgesamt aus der durchstoßbaren Folie (2) sondern aus der unteren, nicht durchstoßbaren Folie (1) und der oberen, durchstoßbaren Folie (2) gefertigt ist.

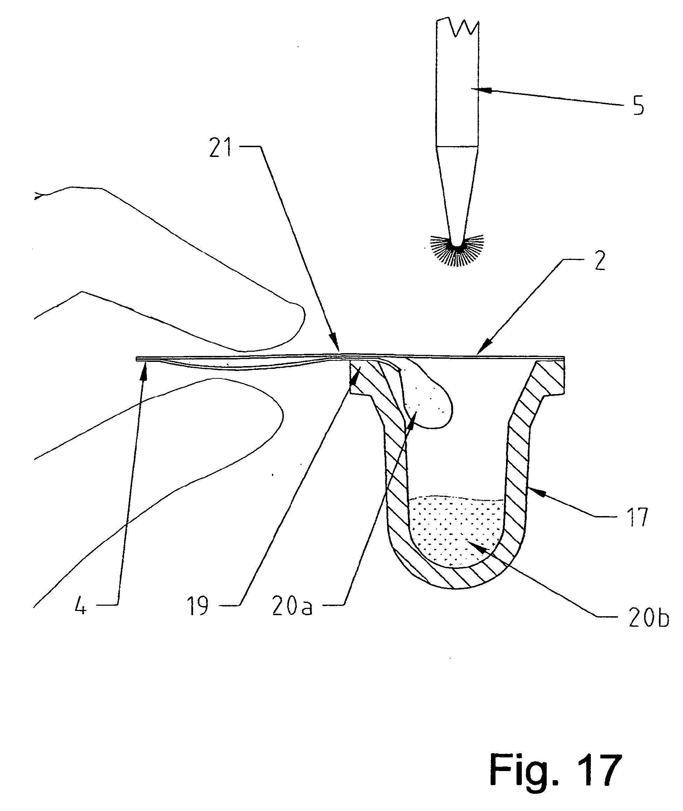

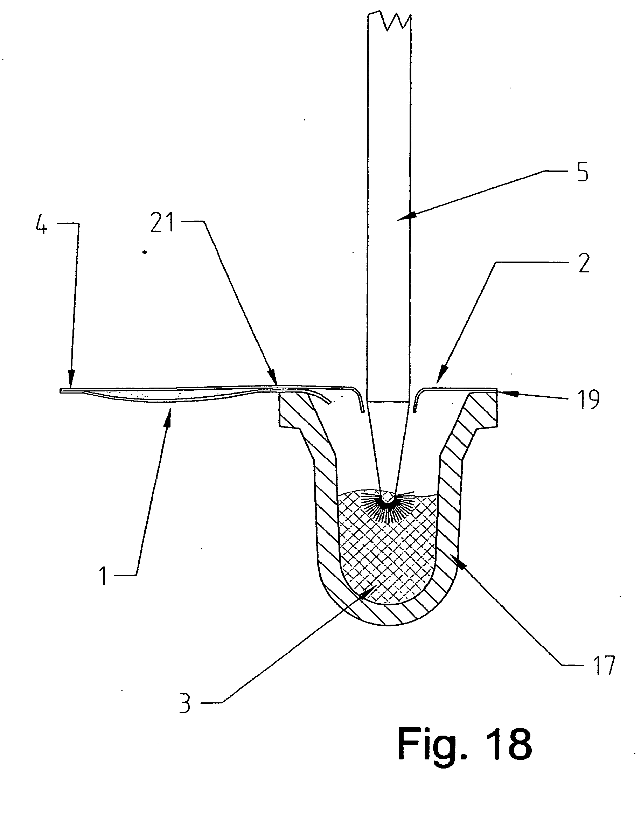

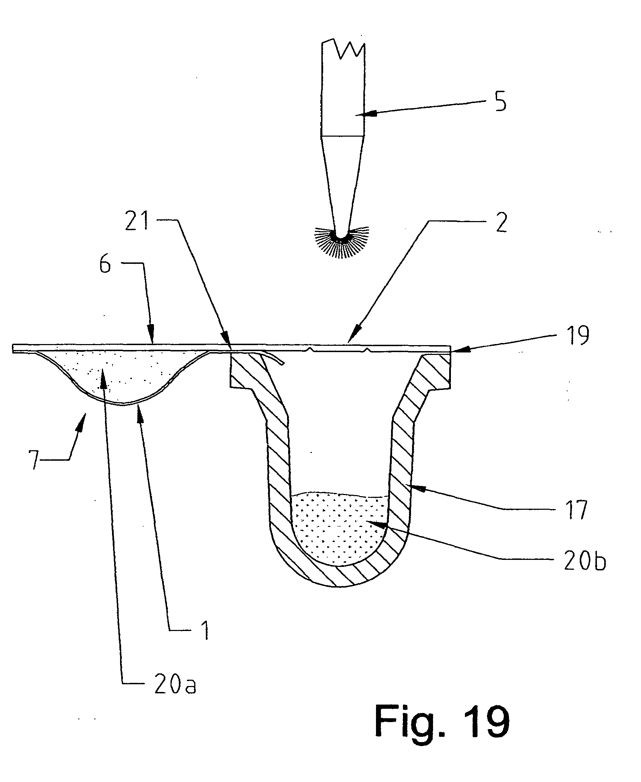

Der Innenraum (7) ist dabei mit der oberen, durchstoßbaren Folie (2) fest verschlossen (Fig. 16, 20). Der Folienbehälter ist zwischen den Folien (1) und (2) mit einer Siegelnaht (21) verschlossen. Auf Druck auf den Folienbehälter wird ein selektiver Durchgangsbereich am Randbereich der Siegelnaht geöffnet und die Komponente (20a) wird über den Randbereich in den Innenraum des Behälters (17) gedrückt (Fig. 17,18). Der oder einer der über den Randbereich hinausragende(n) Folienbehälter ist zugleich als Griffabschnitt (6) zur besseren Handhabung der Vorrichtung ausgebildet (Fig.19).

Im Innenraum von (17) vermischen sich die Komponenten aus den Folienbehältern (7) mit der im Innenraum des Kunststoffbehälters befindlichen Komponente (20b). Mit Hilfe des Applikationsgerätes (5) wird die obere Folie (2) durchstoßen und die zu applizierende Substanz kann, bevor sie aufgenommen und appliziert wird, weiter vermischt werden (Fig. 18). Durch Rührbewegungen des Applikationsgerätes und/oder durch die Kapillarwirkung der eventuelle am Applikationskopf des Applikationsgerätes befindlichen Bürstenhaare oder Schwammes, wird der Mischvorgang unterstützt. Anschließend kann die Substanz aus dem Behälter (17) mit dem Applikationsgerät (5) heraus appliziert werden.

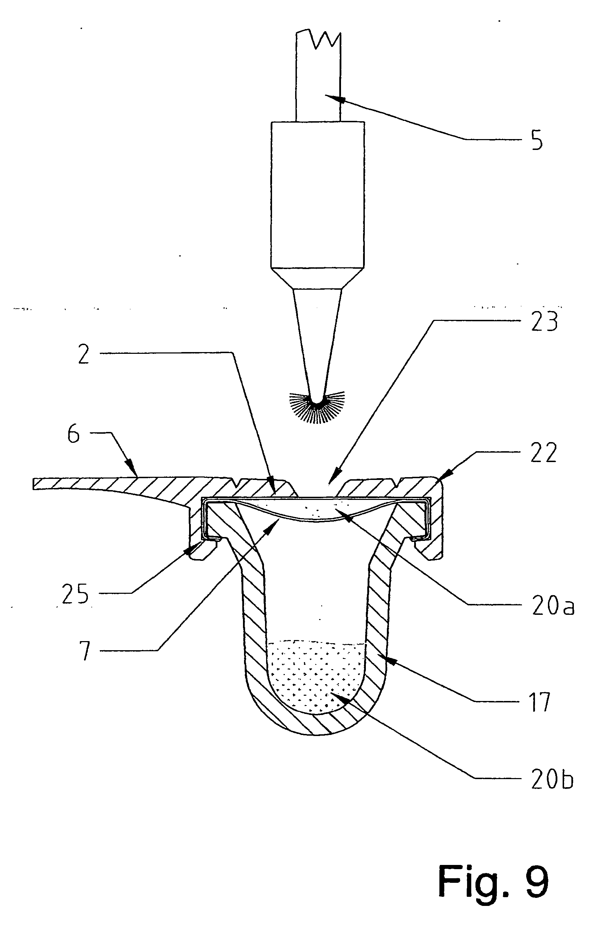

Bei einer weiteren Ausführungsform für zweikomponentige Substanzen ist es vorgesehen, daß der Folienbehälter (7) mit einem Deckel (22) am Kunststoffbehälter (17) festgehalten wird, wobei der Deckel (22) eine Öffnung (23) zum Durchstoßen mit dem Applikationsgerät (5) aufweist (Fig. 9). Der Deckel (22) fördert die Stabilität des Behältnisses und die Befestigung der Folienbehälter (4). Dem Anwender ermöglicht die im Deckel (22) vorgegebene Öffnung (23) ein sicheres Durchstoßen des Folienbehälters (18).

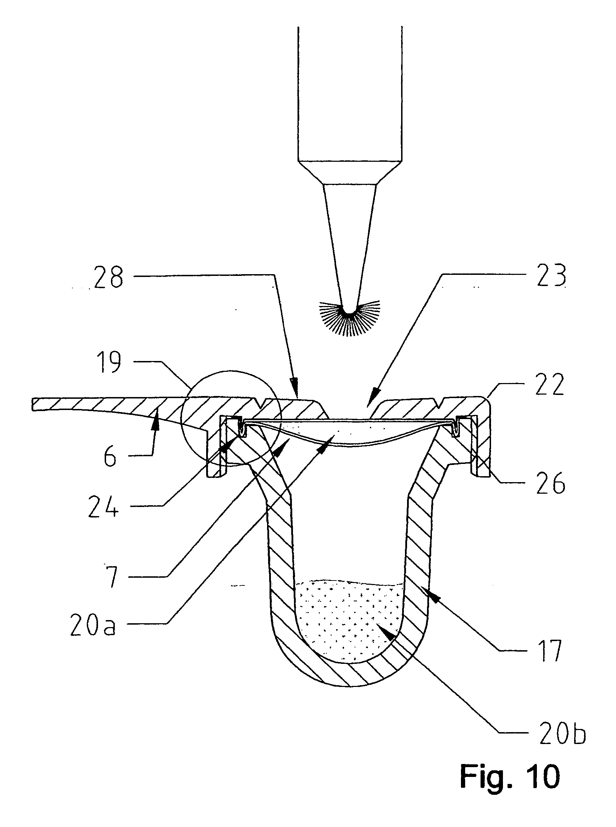

Am Deckel (22) und/oder am Randbereich des Kunststoffbehälters können zusätzliche Abdichtvorrichtungen (24) vorhanden sein (Fig. 10). Die Abdichtvorrichtungen (24) können flexible Dichtelemente, gummiartige Dichtungen, wie z.B. O-Ringe sein, die eine permanente Anpreßkraft auf die Folie und den Randbereich des Behälters erzeugen und somit abdichtend wirken. Die Abdichtvorrichtung kann aber auch nur ein geschwungene Führung zwischen Behälterrand und Deckel sein, in die die Folie eingequetscht wird (Fig. 10) Die Abdichtvorrichtungen bewirken sowohl ein festes Einklemmen des Folienbehälters (7) am Randbereich (19) als auch eine Abdichtung des Innenraumes des Behälters (17). Die Abdichtvorrichtung (24) kann durch Verklebung oder Verschweißung, z.B. durch Ultraschall, in ihrer Abdichtwirkung verstärkt werden.

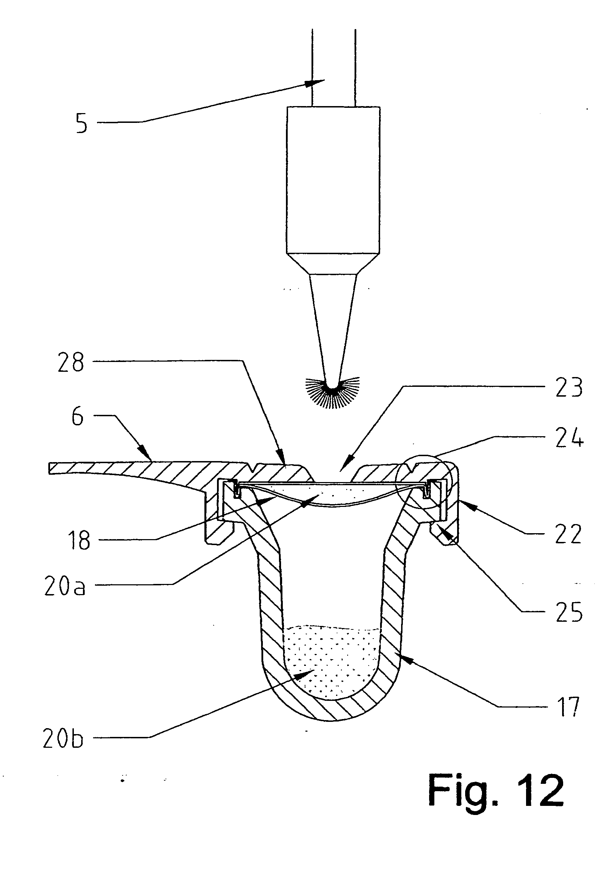

Weiterhin können der Kunststoffbehälter (17) und der Deckel (22) durch eine Schnappverbindung (25) miteinander verbunden sein, die nach dem Einrasten eine kontinuierliche Anpreßkraft zwischen Behälter (17) und Deckel (22), zwischen denen sich der Randbereich des Folienbehälters (7) befindet, im Bereich der Abdichtvorrichtung (24) erzeugt (Fig. 12). Die Schnappverbindung sichert ein festen Halt des Deckels (22) auf dem Behälter (17) und unterstützt damit auch die abdichtende Wirkung der Folienbefestigung am Randbereich (19).

Eine weitere bevorzugte Ausführungsform der beschriebenen Art für zweikomponentige Substanzen liegt vor, wenn die Abdichtvorrichtung (24) durch ein Gewinde (26) ersetzt wird (Fig. 10). Dies hat insbesondere bei der Herstellung der erfindungsgemäßen Vorrichtung den Vorteil einer einfachen Montage. Der mit einer Komponente (20 a) gefüllte Folienbehälter (7) ist über den Behälter (17) gelegt und mit einem Deckel mit Gewinde auf den Behälter aufgeschraubt (Fig. 10).

Die Deckelöffnung (23) kann aus flexiblen Lappen (28) umgeben sein (Fig. 12, 13). Diese Lappen (28) können durch das Applikationsgerät (5) beim Durchstoßen des Folienbehälters (7) in den Innenraum des Behälters (17) gebogen werden (Fig. 13).

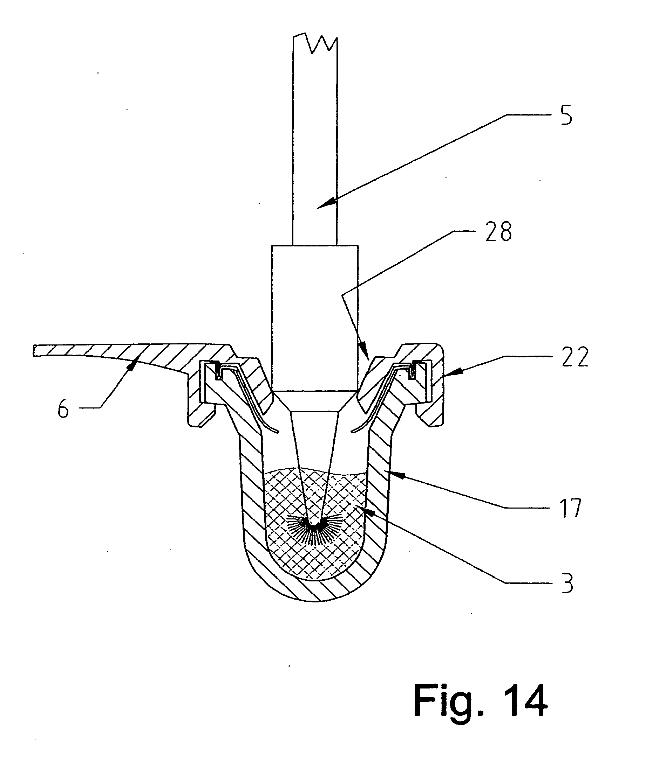

Die Lappen unterstützen beim Herunterdrücken des Applikationsgerätes das Ausdrücken der Komponente (20a) aus dem Folienbehälter (7) (Fig. 13,14). Die Lappen können aus dem Deckelmaterial gebildet sein, wie z.B. Kunststoff. Flexibel heißt, daß sie sich in den Innenraum des Behälters verbiegen lassen können. Weiterhin können die flexiblen Lappen mit radialen Einschnitten versehen sein, durch die das nach-Innen-biegen erleichtert wird. Unterstützend können Sollbiegestellen am Randbereich des Deckels angebracht sein, so daß eine passige Öffnung für das Applikationsgerät geschaffen wird. Der passige Sitz verhindert, daß sich beim ruckartigen Durchstoßen des Folienbehälters (7) Bestandteile der Komponente (20a) aus dem Folienbehälter oder der Komponente aus dem Behälter (17) unbeabsichtigt aus dem Behälter herausgeschleudert werden.

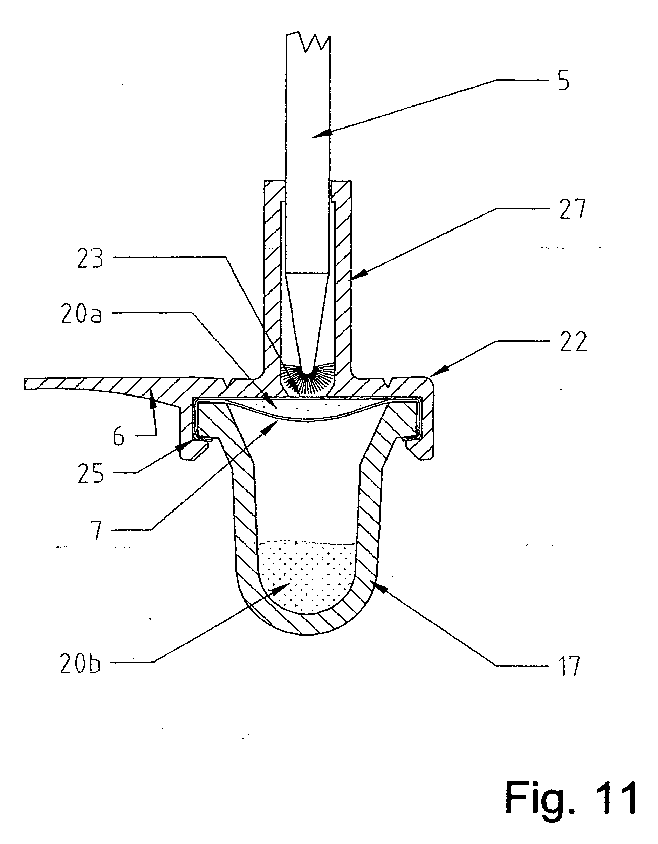

Eine weitere bevorzugte Ausführungsform ergibt sich, wenn auf dem Deckel (22) ein Führungsteil (27) angebracht ist, indem das Applikationsgerät (5) einsatzbereit untergebracht ist (Fig. 11). Das Führungsteil kann aus dem gleichen Material wie der Deckel, beispielsweise im Spritzgußverfahren in einem Stück hergestellt werden. Daraus ergibt sich der Vorteil, daß der Anwender das Applikationsgerät griffbereit zur Hand hat. Er muß das Applikationsgerät nur durch den Folienbehälter (7) drücken, eventuell kurz die Komponenten vermischen, und kann anschließend sofort die Substanz (3) applizieren. Das Führungsteil (27) ist vorteilhaft so ausgebildet, daß beim Hereindrücken des Applikationsgerätes (5) die Führungsschenkel des Führungsteils an vorgegebenen Sollbruchstellen wegbiegen oder wegbrechen (Fig. 11). Auch ergibt sich aus der Ausführungsform mit Führungsteil (27) der Vorteil, daß aus Sterilitätsgründen bei der Anwendung im zahnmedizinischen Bereich, das Applikationsgerät als Einwegartikel zu gebrauchen ist. Durch die direkt Befestigung des Applikationsgerätes am Applikationsgefäß (17) wird eine Kontamination der zu applizierenden Substanz mit der Umgebung ausgeschlossen.

Ein weiterer Vorteil dieser Ausführungsform ist, daß eventuell auftretende Spritzer aus dem Behälter (17) am Führungsteil (27) hängen bleiben und damit am unkontrollierten Austritt gehindert werden. Das Applikationsgerät (5) kann beim Herein- oder Herausziehen diese Substanzreste unproblematisch mitaufnehmen.

Der Handgriff (6) ist bei allen Ausführungsformen zur sichereren Handhabung vorgesehen (Fig. 1, 19, 20).

Bei allen Ausführungsformen können die Folien (1 und 2) an der Siegelnaht (4) durch Verklebung oder Verschweißung, z.B. durch Ultraschall, fest miteinander bzw. mit dem Behälter (17) verbunden sein.

Die erfindungsgemäße Vorrichtung ist wie beschrieben einfach zu handhaben und erlaubt ein schnelles, sicheres und gezieltes Applizieren geringer Flüssigkeitsmengen. Die Vorteile der erfindungsgemäßen Vorrichtung sind:
➢ gas- und flüssigkeitsdicht
➢ individuelle Lagerstabilität
➢ leicht an Gewicht
➢ platzsparend
➢ wenig Abfall, da keine zusätzliche Umverpackung notwendig ist
➢ schnell und einfach in der Anwendung, keine zusätzliche Umverpackung muß zunächst entfernt werden
➢ Vermeidung von Fehlanwendungen durch sichtbare Markierungen
➢ es liegt eine vordosierte Mengen der zu applizierenden Substanz vor
➢ hygienisch, die Vorrichtung ist als Einwegartikel zu verwenden
➢ kostengünstig in der Herstellung, es werden nur Folien bzw. Kunststoffe verwendet
➢ lange Lagerfähigkeit auch bei Raumtemperatur

Die beschriebene Vorrichtungen eignet sich insbesondere zum Lagern und Applizieren fließfähiger dentaler Adhäsiv- oder Befestigungssubstanzen, Fluoridlacke, Liner oder Desensitizer.

Legende der beschriebenen und in den Zeichnungen dargestellten Vorrichtungsbestandteile und Verfahrensschritte:
- 1: nicht durchstoßbare erste Folie
- 2: durchstoßbare zweite Folie, Deckfolie
- 3: zu applizierende fließfähige Substanz
- 4: Siegelnaht
- 5: Applikationsgerät
- 6: Griffabschnitt
- 7: Mulde, Vertiefung, Innenraum zur Aufnahme von (3)
- 8: Verstrebungen, Stege zur mechanischen Stabilisierung
- 9: siegelfähige Kunststoffbeschichtung der Folie (2)
- 10: siegelfähige Kunststoffbeschichtung der Folie (1)
- 11: Markierung am Griffabschnitt (6)
- 12: Perforation zum Abtrennen mehrerer Vorrichtungen
- 13: Verbindung, Verklebung zwischen (8) und (2)
- 14: Barrieren
- 15: Markierung am Durchstoßpunkt oberhalb der Mulde (7)
- 16: äußere Kunststoffschicht
- 17: Behälter aus Kunststoff
- 18: Folienbehälter zur Aufnahme einer Komponente (20)
- 19: Randbereich des Behälters (17), bzw. Mulde (7)
- 20 a/20 b: Komponenten bei zwei- oder mehrkomponentigen Substanzen (3)
- 21: lösbare Siegelnaht
- 22: Deckel des Behälters (17)
- 23: Öffnung im Deckel (22) zum Durchstoßen mit einem Applikationsgerät (5)
- 24: Abdichtvorrichtung
- 25: Schnappverbindung zwischen Randbereich (19) und Deckel (22)
- 26: Gewinde
- 27: Führungsteil zur Aufnahme des Applikationsgerätes (5)
- 28: flexible Lappen, Stege, die mittels des Applikationsgerätes (5) durch Sollbruchstellen in den Innenraum (7) klappen
- F: Kraft zum Durchstoßen der Folie (2)

## Patentansprüche

1. Vorrichtung zum Lagern und Applizieren fließfähiger Dentalmaterialien (3) bestehend aus einer Mulde (7), die aus einer ersten verformbaren, nicht durchstoßbaren und mit einer Sperrschicht versehenen Folie (1) geformt ist, einer diese Mulde (7) abdeckenden zweiten Folie (2), die ebenfalls mit einer Sperrschicht ausgestattet ist und gas- und flüssigkeitsdicht die Mulde (7) verschließt und einem zugehörigen Applikationsgerät (5), **dadurch gekennzeichnet, daß** die erste Folie (1) fest mit der zweiten Folie (2) versiegelt ist, die erste Folie (1) einen Griffabschnitt (6) aufweist, der stegartige Verstrebungen (8) zur mechanischen Stabilisierung aufweist, und daß das Applikationsgerät aus einem mit einer Spitze versehenen stabförmigen Gegenstand besteht und die Spitze mit einem benetzbaren Mittel versehen ist, das der Aufnahme der Substanz (3) dient, so daß die abdeckende Folie (2) zur Entnahme der Substanz (3) mit dem Applikationsgerät (5) durchstoßen wird, dieses Applikationsgerät (5) beim Durchstoßen mit Substanz (3) benetzt wird und die Substanz (3) mit dem Applikationsgerät (5) auf die Behandlungsstelle aufgetragen werden kann.

2. Vorrichtung nach Anspruch 1 **dadurch gekennzeichnet, daß** die Folie (2) aus einem mehrschichtigen Folienverbund mit mindestens einer Sperrschicht aus Aluminium sowie aus einer 0,01 - 20 µm dicken siegelfähigen Kunststoffschicht besteht.

3. Vorrichtung nach den Ansprüchen 1 bis 2 **dadurch gekennzeichnet, daß** die Folien (1) und (2) siegelfähige Kunststoffschichten (9, 10) aufweisen, die aus Laminatfolie, PP, PE, Aluminium oder anderem versiegelungsfähigen Verbundmaterial bestehen.

4. Vorrichtung nach den Ansprüchen 1 bis 3 **dadurch gekennzeichnet, daß** sich auf der Oberseite der Deckfolie (2) eine Markierung der zu durchstoßenden Stelle (15) befindet.

5. Vorrichtung nach den Ansprüchen 1 bis 4 **dadurch gekennzeichnet, daß** die erste Folie (1) eine äussere Schicht (16) aufweist, die aus einem festen, gleitfähigen Kunststoff, wie beispielsweise Polyamid oder Polyester besteht.

6. Vorrichtung nach den Ansprüchen 1 bis 5 **dadurch gekennzeichnet, daß** die erste Folie (1) einen Griffabschnitt (6) aufweist, der im Querschnitt U-förmig gestaltet ist.

7. Vorrichtung nach Anspruch 1 **dadurch gekennzeichnet, daß** sich in der Mulde (7) eine Flüssigkeitskomponente (20a) befindet, die zweite Folie (2) mit dem Applikationsgerät (5) durchstoßbar ist und sich in Durchstoßrichtung hinter der ersten Folie (1) eine weitere Mulde (17) mit einer weiteren Flüssigkeit (20b) befindet, diese Flüssigkeit (20b) beim Durchstoßen der ersten Mulde (7) mit der aus der Mulde (7) stammenden Flüssigkeit (20a) in Kontakt kommt und sich beide Flüssigkeiten miteinander zu der aufzutragenden Substanz (3) vermischen.

8. Vorrichtung nach den Ansprüchen 1 bis 2 **dadurch gekennzeichnet, daß** sich neben der ersten Mulde (7) mit einer Flüssigkeitskomponente (20a) eine zweite Mulde (17) mit einer zweiten Flüssigkeitskomponente (20b) befindet, die durch dieselbe Abdeckfolie (2) verschlossen wird wie die erste Mulde (7) und daß durch Aufbringen eines äusseren Druckes auf die erste Mulde (7) eine Siegelnaht zwischen den Folienseiten selektiv geöffnet wird, so daß die Flüssigkeitskomponente (20a) aus der ersten Mulde (7) zu der Flüssigkeitskomponente (20b) in der zweiten Mulde (17) hinübertritt und sich beide Flüssigkeiten miteinander zu der aufzutragenden Substanz (3) vermischen.

9. Vorrichtung nach den Ansprüchen 1 bis 8 **dadurch gekennzeichnet, daß** mehrere Vorrichtungen durch Perforationen (12) oder Sollbruchstellen (12) an den Behältern bzw. Folien miteinander verbunden sind und an diesen Stellen bei Bedarf voneinander lösbar sind.

10. Vorrichtung nach den Ansprüchen 1 bis 9 **dadurch gekennzeichnet, daß** die Mulde (17), der Folienbehälter (7), die Folienoberseite (2) und/oder die Folie (1) lichtundurchlässig sind/ist.

## Claims

1. Device for storage and application of flowable dental materials (3), said device being composed of a well (7), which is formed by a first deformable and unpierceable film (1) provided with a barrier layer, of a second film (2) that covers this well (7) and that is also equipped with a barrier layer and closes the well (7) off in a gas-tight and liquid-tight manner, and of an associated applicator (5), **characterized in that** the first film (1) is sealed fixedly to the second film (2), the first film (1) has a grip portion (6) with web-like struts (8) for mechanical stabilization, and **in that** the applicator is composed of a rod-shaped article provided with a tip, and the tip is provided with a wettable means that serves to take up the substance (3), such that the covering film (2) is pierced to permit removal of the substance (3) with the applicator (5), this applicator (5) being wetted with substance (3) upon piercing, and the substance (3) being able to be applied to the treatment site by the applicator (5).

2. Device according to Claim 1, **characterized in that** the film (2) is composed of a multilayer composite film, with at least one barrier layer of aluminium, and of a sealable plastic layer that is 0.01 - 0.20 µm thick.

3. Device according to Claims 1 and 2, **characterized in that** the films (1) and (2) comprise sealable plastic layers (9, 10) that are composed of laminate film, PP, PE, aluminium or other sealable composite material.

4. Device according to Claims 1 to 3, **characterized in that** a marking (15) for the site to be pierced is located on the top face of the cover film (2).

5. Device according to Claims 1 to 4, **characterized in that** the first film (1) has an outer layer (16) that is composed of a solid, slidable plastic, for example polyamide or polyester.

6. Device according to Claims 1 to 5, **characterized in that** the first film (1) has a grip portion (6) with a U-shaped cross section.

7. Device according to Claim 1, **characterized in that** a liquid component (20a) is located in the well (7), the second film (2) can be pierced by the applicator (5), and a further well (17) with a further liquid (20b) is located downstream of the first film (1) in the direction of piercing, this liquid (20b) comes into contact with the liquid (20a) originating from the well (7) upon piercing of the first well (7), and both liquids mix together to give the substance (3) that is to be applied.

8. Device according to Claims 1 and 2, **characterized in that**, alongside the first well (7) with a liquid component (20a), there is a second well (17) with a second liquid component (20b), which is closed by the same cover film (2) as the first well (7), and **in that**, when an external pressure is applied to the first well (7), a sealing seam between the film sides is selectively opened, such that the liquid component (20a) from the first well (7) crosses over to the liquid component (20b) in the second well (17), and both liquids mix together to give the substance (3) that is to be applied.

9. Device according to Claims 1 to 8, **characterized in that** several devices are connected to one another by perforations (12) or predetermined break points (12) on the containers or films and, when necessary, can be detached from one another at these locations.

10. Device according to Claims 1 to 9, **characterized in that** the well (17), the film container (7), the film surface (2) and/or the film (1) is/are impervious to light.

## Revendications

1. Dispositif d'entreposage et d'application de matériaux dentaires fluides (3), constitué d'une goulotte (7) formée à partir d'une première feuille (1) déformable, non perforable et dotée d'une couche de barrière, d'une deuxième feuille (2) qui recouvre cette goulotte (7), également dotée d'une couche de barrière et qui ferme de manière étanche au gaz et au liquide la goulotte (7), et d'un appareil d'application (5) associé, **caractérisé en ce que** la première feuille (1) est reliée solidairement de manière étanche à la deuxième feuille (2), **en ce que** la première feuille (1) présente une partie de saisie (6) qui est dotée de nervures de renfort (8) pour la stabiliser mécaniquement, **en ce que** l'appareil d'application est constitué d'un objet en forme de barre doté d'une pointe et **en ce que** la pointe est dotée d'un moyen apte à être mouillé qui sert à reprendre la substance (3) de telle sorte que soit la feuille de recouvrement (2) soit perforée à l'aide de l'appareil d'application (5) pour prélever la substance (3), que cet appareil d'application (5) soit mouillé par la substance (3) lors de la perforation et que la substance (3) puisse être appliquée à l'emplacement du traitement à l'aide de l'appareil d'application (5).

2. Dispositif selon la revendication 1, **caractérisé en ce que** la feuille (2) est constituée d'une feuille composite stratifiée qui présente au moins une couche de barrière en aluminium ainsi qu'une couche de matière synthétique scellable d'une épaisseur de 0,01 à 20 µm.

3. Dispositif selon les revendications 1 à 2, **caractérisé en ce que** les feuilles (1) et (2) présentent des couches (9, 10) de matière synthétique scellables qui sont constituées d'une feuille stratifiée de PP, de PE, d'aluminium ou d'un autre matériau composite scellable.

4. Dispositif selon les revendications 1 à 3, **caractérisé en ce qu'**un repère de l'emplacement à perforer (15) est placé sur le côté supérieur de la feuille de recouvrement (2).

5. Dispositif selon les revendications 1 à 4, **caractérisé en ce que** la première feuille (1) présente une couche extérieure (16) constituée d'une matière synthétique solide et glissante, par exemple un polyamide ou un polyester.

6. Dispositif selon les revendications 1 à 5, **caractérisé en ce que** la première feuille (1) présente une partie de saisie (6) dont la section transversale a la forme d'un U.

7. Dispositif selon la revendication 1, **caractérisé en ce qu'**un composant liquide (20a) est placé dans la goulotte (7), **en ce que** la deuxième feuille (2) peut être perforée par l'appareil d'application (5), **en ce qu'**une autre goulotte (17) remplie d'un autre liquide (20b) est située en aval de la première feuille (1) dans la direction de perforation, et **en ce que** lors de la perforation de la première goulotte (7), ce liquide (20b) entre en contact avec le liquide (20a) qui provient de la goulotte (7) et les deux liquides se mélangent l'un avec l'autre pour former la substance (3) à appliquer.

8. Dispositif selon les revendications 1 à 2, **caractérisé en ce qu'**en plus de la première goulotte (7) remplie d'un composant liquide (20a), il y a une deuxième goulotte (17) remplie d'un deuxième composant liquide (20b) qui est fermée par la même feuille de recouvrement (2) que la première goulotte (7) et **en ce qu'**en exerçant depuis l'extérieur une poussée sur la première goulotte (7), un cordon de scellement entre les côtés de feuilles est ouvert sélectivement de telle sorte que le composant liquide (20a) déborde de la première goulotte (7) pour aboutir sur le composant liquide (20b) présent dans la deuxième goulotte (17), et que les deux liquides se mélangent l'un avec l'autre pour fournir la substance (3) à appliquer.

9. Dispositif selon les revendications 1 à 8, **caractérisé en ce que** plusieurs dispositifs sont reliés les uns aux autres par des perforations (12) ou des emplacements de rupture préférentielle (12) prévus sur les récipients ou les feuilles et **en ce qu'**ils peuvent être séparés les uns des autres en cas de besoin en ces emplacements.

10. Dispositif selon les revendications 1 à 9, **caractérisé en ce que** la goulotte (17), le récipient en feuille (7), le côté supérieur (2) de la feuille et/ou la feuille (1) ne sont pas transparents vis-à-vis de la lumière.
